# EUROPEAN PATENT APPLICATION

(11) **EP 2 187 307 A1**
(43) Date of publication of application: **19.05.2010**
(21) Application number: 08784063.3
(22) Date of filing: 21.08.2008
(51) Int. Cl.: G06F 9/45, G06F 9/30

(54) **METHOD AND EQUIPMENT FOR REQUESTING AND MANAGING THE XML DOCUMENT**

(30) Priority: 07.09.2007 CN 200710146074
(71) Applicant: Huawei Technologies Co., Ltd., Longgang District, Shenzhen Guangdong 518129 (CN)
(72) Inventor: JI, Fang, Guangdong 518129 (CN)
(74) Representative: Charles, Glyndwr
(86) International application number: PCT/CN2008/072072
(87) International publication number: WO 2009/033389

(57) **Abstract**

A method for requesting extensible Markup Language (XML) document management is provided. The method includes the following steps. A client sends an original location and a target location of a node to be moved to a server through a node movement request. The server performs a corresponding "move" operation upon determination of the node movement request. A method for managing an XML document, an XML document management client (XDMC), and an XML document management server (XDMS) are further provided. Because the client sends signaling only to perform the "move" operation, the process is very simple and delay is short. In addition, even if the server fails to receive the signaling or an error occurs when the server receives the signaling, the stored data is still kept normal, so that reliability of data operation is improved.

## Description

### CROSS-REFERENCE TO RELATED APPLICATIONS

This application is a continuation of International Application No. PCT/CN2008/072072, filed on August 21, 2008, which claims priority to Chinese Patent Application No. 200710146074.6, filed on September 7, 2007, both of which are hereby incorporated by reference in their entireties.

### FIELD OF THE TECHNOLOGY

The present invention relates to the technical field of information management, and more particularly, to a method for requesting extensible Markup Language (XML) document management, a method for managing an XML document, and an XML document management client (XDMC) and an XML document management server (XDMS).

### BACKGROUND OF THE INVENTION

The extensible Markup Language (XML) is a set of rules defining semantic markups. The defined markups divide a document into a plurality of components and mark the components. Documents that conform to the XML rules are XML documents. The XML documents are easy to read, compile and write, and are an ideal format for describing and exchanging data in network applications.

An XML document management client (XDMC) may use a document management request, for example, methods such as "GET", "PUT", and "DELETE" in the XML Configuration Access Protocol (XCAP) or Hypertext Transfer Protocol (HTTP), to perform operations such as reading, writing, modification, and deletion on application configuration data stored on an XML document management server (XDMS) in the XML format.

In actual applications, sometimes a user also needs to perform a "move" operation on nodes in the XML document. For example, a contact list of a user is stored on the XDMS as an XML document. The contacts in the list are categorized into groups such as "colleague", "friend", and "family". When a user needs to categorize a contact again, for example, to categorize a contact originally in the "colleague" group in the "friend" group, a "move" operation needs to be performed on the information of the contact to move the information from the "colleague" group to the "friend" group. Currently, the XDMC uses "PUT" and "DELETE" methods to accomplish the "move" operation. That is, the information of the contact is first added to the "friend" group through a PUT message, and the information of the contact is then deleted from the "colleague" group through a DELETE message. Of course, the sequence of performing the addition and deletion operations may be interchanged.

### SUMMARY OF THE INVENTION

The present invention provides a method for requesting XML document management, which realizes a "move" operation simply and reliably. The method includes the following steps: A node movement indication of an application is received. A node movement request is generated according to the node movement indication, in which the node movement request includes an original location and a target location of a node to be moved. The node movement request is sent to a server.

The present invention also provides a method for managing an XML document, which includes the following steps. A document management request sent by a client is received. It is determined that the document management request is a node movement request. An original location and a target location of a node to be moved are obtained from the node movement request. A transaction for moving the node to be moved from the original location to the target location is performed.

The present invention further provides an XML document management client (XDMC), which includes a user operating unit, a request generating unit, and a request sending unit. The user operating unit is adapted to receive a node movement indication of an application. The request generating unit is adapted to generate a node movement request according to the node movement indication received by the user operating unit, in which the node movement request includes an original location and a target location of a node to be moved. The request sending unit is adapted to send the node movement request generated by the request generating unit to a server.

The present invention also provides an XML document management server (XDMS), which includes a request receiving unit, a request parsing unit, and a request processing unit. The request receiving unit is adapted to receive a document management request sent by a client. The request parsing unit is adapted to determine that the document management request received by the request receiving unit is a node movement request, and obtain an original location and a target location of a node to be moved from the node movement request. The request processing unit is adapted to perform a transaction for moving the node to be moved from the original location to the target location.

The present invention further provides a computer readable storage medium recording a computer readable program. The computer readable program enables a computing unit to perform the following method: a node movement indication of an application is received. Anode movement request is generated according to the node movement indication, in which the node movement request includes an original location and a target location of a node to be moved. The node movement request is sent to a server.

The present invention further provides a computer readable storage medium recording a computer readable program. The computer readable program enables a computing unit to perform the following method: A document management request sent by a client is received. It is determined that the document management request is a node movement request. An original location and a target location of a node to be moved are obtained from the node movement request. A transaction for moving the node to be moved from the original location to the target location is performed.

### BRIEF DESCRIPTION OF THE DRAWINGS

FIG. 1 is a schematic diagram of a method for requesting XML document management according to an embodiment of the present invention;
FIG. 2 is a schematic diagram of a method for managing an XML document according to an embodiment of the present invention;
FIG. 3 is a schematic diagram of the logical structure of an XDMC according to an embodiment of the present invention; and
FIG. 4 is a schematic diagram of the logical structure of an XDMS according to an embodiment of the present invention.

### DETAILED DESCRIPTION OF THE EMBODIMENTS

The present invention provides a method for requesting XML document management. A client sends an original location and a target location of a node to be moved to a server through a node movement request. The server performs a corresponding "move" operation upon determination of the node movement request. The present invention further provides a method for managing an XML document, an XML document management client (XDMC), and an XML document management server (XDMS), which are illustrated in detail in the following separately.

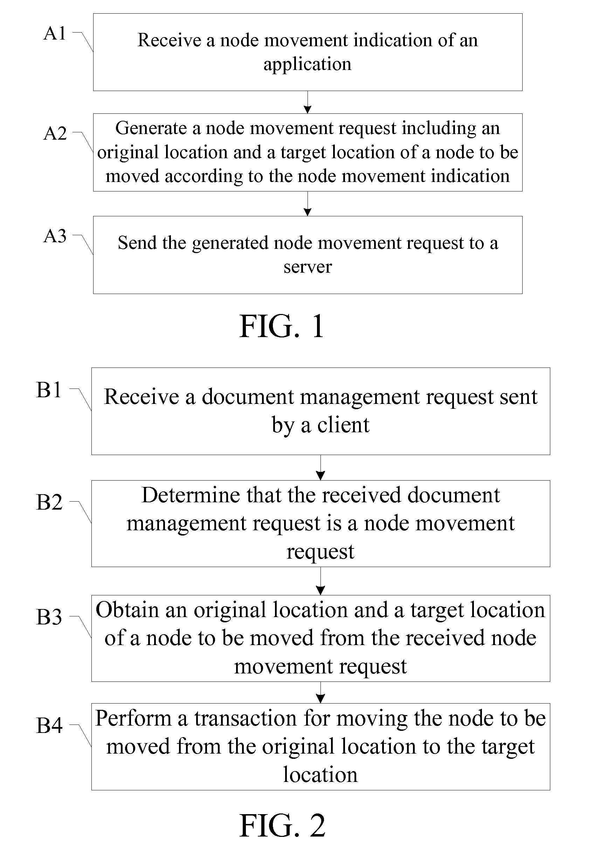

FIG. 1 shows a process of the method for requesting XML document management according to an embodiment of the present invention. The method includes the following steps.

In step A1, a node movement indication of an application is received.

The node movement indication is an operation request that a user needs to move a node from an original location to a target location. The XDMC can obtain the node movement indication of the application through an operation interface provided to the user.

In step A2, a node movement request is generated according to the node movement indication. The generated node movement request includes the original location and the target location of the node to be moved.

The original location and the target location of the node to be moved may be located in a same XML document or in different XML documents. The XDMC may construct the node movement request in a mode comprehensible for any XDMS according to an agreement between the XDMC and XDMS, which includes, but is not limited to, the following two modes.

Mode 1: A new method for "move" operation is defined.

A new method for "move" operation can be defined with reference to an existing XML document management request, for example, methods such as "GET", "PUT", "DELETE" in the XCAP and HTTP protocols. A new method name such as "MOVE" and "MOVETO" is used to identify the node movement request. An original location and a target location of a node to be moved are located in, for example, a request line of the node movement request, or a set message header field or message body. In this embodiment, the specific manner for carrying the original location and target location is not limited, which includes, but is not limited to, the following:
(1) The target location of the node to be moved is placed in a Request-URI of the request line, and the original location is placed in a set message header field, for example, a Content-Location header field; alternatively, the original location of the node to be moved is placed in the Request-URI of the request line, and the target location is placed in the set message header field, for example, the Content-Location header field.
(2) The target location of the node to be moved is placed in the Request-URI of the request line, and the original location is placed in the message body; alternatively, the original location of the node to be moved is placed in the Request-URI of the request line, and the target location is placed in the message body.
(3) The original location and the target location of the node to be moved are placed in the message body in sequence.
(4) The original location and the target location of the node to be moved are placed in two set message header fields.

The new method is named "MOVE". An example of a node movement request in which the target location is placed in the Request-URI and the original location is placed in the Content-Location header field is as follows:

```
    MOVE

    http://xcap.example.com/resource-lists/users/sip:bill@example.com/index/

  ∼∼/resource-lists/list%5b@name=%22colleague%22%5d
 /entry%5b@uri=%22sip:petri@example.com%22%5d HTTP/1.1

    Host:xcap.example.com

       Content-Location:http://xcap.example.com/resource-lists/users/sip:bill@example.com/inde
    x/

  ∼∼/resource-lists/list%Sb@name=%22friends%22%5d
 /entry%5bguri=%22sip:petrigexample.com%22%5d
```

The node movement request indicates an operation of moving an entry node in a list to another list in the same document.

Mode 2: A new value is defined for a message header field through existing method types to identify "move" operation.

For example, a "POST" method in the HTTP protocol may be selected. A new value is extended and defined for a set message header field to identify a "move" operation. Similar to Mode 1, the original location and the target location of the node to be moved may be randomly placed in a request line of the node movement request, or a set message header field or message body.

An example of the node movement request in which a new value "application/move-node+XML" is extended and defined for the Content-Type header field through an HTTP POST method to identify the "move" operation, the target location is placed in the Request-URI, and the original location is placed in the message body is as follows:

```
    POST

    http://xcap.example.com/resource-lists/users/sip:bill@example.com/index/
 ∼∼/resource-lists/list%Sb@name=%22colleague%22%5d
 /entry%5b@uri=%22sip:petri@example.com%22%5d HTTP/1.1

    Content-Type:application/move-node+xml

       Host:xcap.example.com

       <?xml version="1.0" encoding="UTF-8"?>
  <original-location xmlns="com:huawei:xml:xdm:move-node
 ">http://xcap.example.com/resource-lists/users/sip:bill@example.com/index/
 ∼∼/resource-lists/list%5b@name=%22friends%22%5d
 /entry%5b@uri=%22sip:petri@example.com%22%5d</original-location>
```

In step A3, the generated node movement request is sent to the server.

The XDMC may send the node movement request to the XDMS with reference to the mode of sending document management requests of other existing types.

The XDMC usually receives a processing result of the document management request from the XDMS, for example, success or failure. The XDMC provides the processing result returned by the XDMS back to the user through the operation interface, or initiates a request again automatically when the processing fails.

FIG. 2 shows a process of a method for managing an XML document according to an embodiment of the present invention, which includes the following steps.

In step B1, a document management request sent by a client is received.

This step may be performed with reference to the mode of receiving an existing document management request.

In step B2, it is determined that the received document management request is a node movement request.

An XDMS may determine a type of the received document management request by parsing the document management request according to an agreement between the XDMS and an XDMC. For example, the following are two examples for identifying the node movement request.

Example 1: The node movement request is identified through a newly defined method.

The XDMS may determine that the document management request is a node movement request according to a method name of the document management request.

Example 2: The node movement request is identified by a newly defined value of a message header field in an existing method type.

The XDMS may determine that the document management request is a node movement request according to the method name of the document management request and the value of the set message header field.

In step B3, an original location and a target location of a node to be moved is obtained from the received node movement request.

After it is determined that a type of the received document management request is the node movement request, the XDMS obtains the original location and the target location of the node to be moved by parsing the received node movement request according to an agreement between the XDMS and the XDMC. For example, the process is as follows.

The original location and the target location of the node to be moved are obtained from any one of a request line of the node movement request, a set message header field, and a message body.

Alternatively, the original location and the target location of the node to be moved are obtained from any two of the request line of the node movement request, the set message header field, and the message body.

In step B4, a transaction for moving the node to be moved from the original location to the target location is performed.

The XDMS may design a new mechanism for performing the "move" transaction. In addition, based on existing mechanisms for performing "add" and "delete" transactions, the "move" transaction may also be accomplished by combining a transaction for deleting the node to be moved from the original location and a transaction for adding the node to be moved to the target location. In the combined operation, the sequence of performing the "add" and "delete" transactions may be set as required.

The XDMS usually returns a processing result of the document management request to the XDMC, for example, success or failure. In the embodiment of the present invention, even though the XDMS fails to receive the node movement request so that the XDMS fails to return to the "move" operation, the data on the XDMS is still kept normal.

In the above method embodiment, a client sends the original location and the target location of the node to be moved to a server through the node movement request, and a corresponding "move" operation is performed upon determination of the node movement request. As the client sends signaling only to perform the "move" operation, the process is simple and the delay is short. In addition, even if the server fails to receive the signaling or an error occurs when the server receives the signaling, the stored data is still kept normal, so that reliability of the data operation is improved.

The XDMC and XDMS corresponding to the above method embodiment are illustrated in detail below.

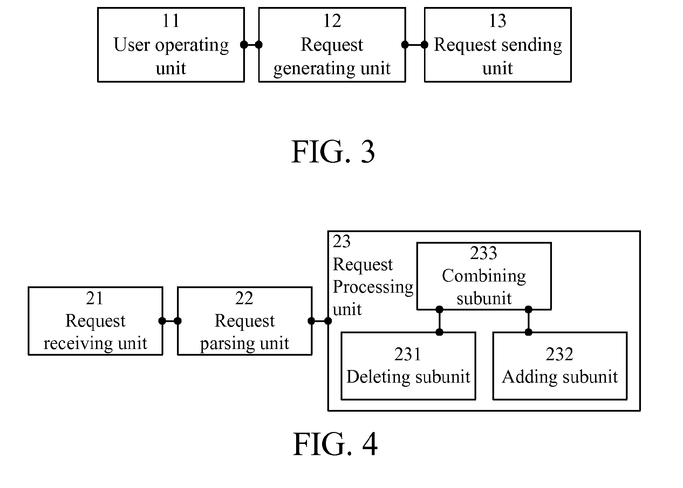

FIG. 3 is a schematic diagram of the logical structure of an XDMC according to an embodiment of the present invention. The client is adapted to perform the method for requesting XML document management according to the above method embodiment. The specific structure of the XDMC includes a user operating unit 11, a request generating unit 12, and a request sending unit 13.

The user operating unit 11 is adapted to receive a node movement indication of an application.

The request generating unit 12 is adapted to generate a node movement request according to the node movement indication received by the user operating unit 11. The node movement request includes an original location and a target location of a node to be moved.

The request sending unit 13 is adapted to send the node movement request generated by the request generating unit 12 to a server.

FIG. 4 is a schematic diagram of the logical structure of an XDMS according to an embodiment of the present invention. The server is adapted to perform the method for managing an XML document in the above method embodiment. The specific structure of the XDMS includes a request receiving unit 21, a request parsing unit 22, and a request processing unit 23.

The request receiving unit 21 is adapted to receive a document management request sent by a client.

The request parsing unit 22 is adapted to determine that the document management request received by the request receiving unit 21 is a node movement request, and obtain an original location and a target location of a node to be moved from the node movement request.

The request processing unit 23 is adapted to perform a transaction for moving the node to be moved from the original location to the target location according to a parsing result of the request parsing unit 22.

The request processing unit 23 may specifically include a deleting subunit 231, an adding subunit 232, and a combining subunit 233.

The deleting subunit 231 is adapted to perform a transaction for deleting the node to be moved from the original location.

The adding subunit 232 is adapted to perform a transaction for adding the node to be moved to the target location.

The combining subunit 233 is adapted to trigger a combined operation of the deleting subunit 231 and the adding subunit 232.

Persons of ordinary skill in the art should understand that all or part of the steps according to the embodiments of the method may be implemented by a program instructing relevant hardware. The program may be stored in a computer readable storage medium. When the program is run, one of or a combination of the steps according to the embodiments of the method is performed.

In addition, various functional units according to each embodiment of the present invention may be integrated in one processing module or may exist as various separate physical units. The integrated module may be implemented through hardware, or may also be implemented in a form of a software functional module. When the integrated module is implemented in the form of the software functional module and sold or used as a separate product, the integrated module may be stored in a computer readable storage medium.

The above storage medium may be a read only memory, a magnetic disk or an optical disk.

As can be seen from the above embodiments, for the present invention, the client sends the original location and the target location of the node to be moved to the server through a node movement request. The server performs a corresponding "move" operation upon determination of the node movement request. Because the client sends signaling only to perform the "move" operation, the process is simple and the delay is short. In addition, even though the server fails to receive the signaling or an error occurs when the server receives the signaling, the stored data is still kept normal, so that reliability of the data operation is improved.

The method for requesting XML document management, the method for managing an XML document, the XDMC, and the XDMS according to the embodiments of the present invention are illustrated in detail in the foregoing. Specific examples are provided herein to illustrate the principles and implementations of the present invention. The illustration of the above embodiments is intended to only assist understanding of the methods and core ideas of the present invention. Further, persons of ordinary skill in the art may change the specific implementations and the application scope according to the conceptions of the present invention. In conclusion, the contents of the specification shall not be construed as limitations to the present invention.

## Claims

1. A method for requesting extensible Markup Language (XML) document management, comprising:
receiving a node movement indication of an application;
generating a node movement request according to the node movement indication, wherein the node movement request comprises an original location and a target location of a node to be moved; and
sending the node movement request to a server.

2. A method for managing an extensible Markup Language (XML) document, comprising:
receiving a document management request sent by a client;
determining that the document management request is a node movement request;
obtaining an original location and a target location of a node to be moved from the node movement request; and
performing a transaction for moving the node to be moved from the original location to the target location.

3. The method for managing an XML document according to claim 2, wherein the performing the transaction for moving the node to be moved from the original location to the target location comprises:
combining a transaction for deleting the node to be moved from the original location and a transaction for adding the node to be moved to the target location.

4. The method for managing an XML document according to claim 2 or 3, wherein the determining that the document management request is the node movement request comprises:
determining that the document management request is the node movement request according to a method name of the document management request.

5. The method for managing an XML document according to claim 4, wherein the obtaining the original location and the target location of the node to be moved from the node movement request comprises:
obtaining the original location and the target location of the node to be moved from any one of a request line of the node movement request, a set message header field, and a message body; or
obtaining the original location and the target location of the node to be moved from any two of a request line of the node movement request, a set message header field, and a message body.

6. The method for managing an XML document according to claim 2 or 3, wherein the determining that the document management request is the node movement request comprises:
determining that the document management request is the node movement request according to a method name of the document management request and a value of the set message header field.

7. The method for managing an XML document according to claim 6, wherein the set message header field is a Content-Type header field, and after it is determined that the document management request is the node movement request according to the method name of the document management request and the value of the Content-Type header field, the obtaining the original location and the target location of the node to be moved from the node movement request comprises:
obtaining one of the original location and the target location of the node to be moved from a request line of the node movement request; and
obtaining another one of the original location and the target location of the node to be moved from a message body of the node movement request.

8. An extensible Markup Language (XML) document management client (XDMC), comprising:
a user operating unit, adapted to receive a node movement indication of an application;
a request generating unit, adapted to generate a node movement request according to the node movement indication received by the user operating unit, wherein the node movement request comprises an original location and a target location of a node to be moved; and
a request sending unit, adapted to send the node movement request generated by the request generating unit to a server.

9. An extensible Markup Language (XML) document management server (XDMS), comprising:
a request receiving unit, adapted to receive a document management request sent by a client;
a request parsing unit, adapted to determine that the document management request received by the request receiving unit is a node movement request, and obtain an original location and a target location of a node to be moved from the node movement request; and
a request processing unit, adapted to perform a transaction for moving the node to be moved from the original location to the target location.

10. The XDMS according to claim 9, wherein the request processing unit comprises:
a deleting subunit, adapted to perform a transaction for deleting the node to be moved from the original location;
an adding subunit, adapted to perform a transaction for adding the node to be moved to the target location; and
a combining subunit, adapted to trigger a combined operation of the deleting subunit and the adding subunit.

11. A computer readable storage medium recording a computer readable program, wherein the computer readable program enables a computing unit to perform a method of
receiving a node movement indication of an application;
generating a node movement request according to the node movement indication, wherein the node movement request comprises an original location and a target location of a node to be moved; and
sending the node movement request to a server.

12. A computer readable storage medium recording a computer readable program, wherein the computer readable program enables a computing unit to perform a method of
receiving a document management request sent by a client;
determining that the document management request is a node movement request;
obtaining an original location and a target location of a node to be moved from the node movement request; and
performing a transaction for moving the node to be moved from the original location to the target location.
